# EUROPEAN PATENT SPECIFICATION

(11) **EP 0 501 091 B1**
(45) Date of publication and mention of the grant of the patent: **05.11.1997**
(21) Application number: 91830066.6
(22) Date of filing: 27.02.1991
(51) Int. Cl.: B29C 45/26, B29D 1/00

(54) **Plastics threaded fittings molding mechanism**
Vorrichtung zum Formen von geschraubten Kunststoffverbindungen
Dispositif pour le moulage de raccords en plastique filetés

(43) Date of publication of application: 02.09.1992
(73) Proprietor: Guo, Muh-Juh, Tainan City (TW)
(72) Inventor: Guo, Muh-Juh, Tainan City (TW)
(74) Representative: Righetti, Giuseppe

(56) References cited:
- FR-A- 2 625 488
- GB-A- 2 230 071
- PLASTVERARBEITER, vol. 30, no. 4, April 1979, pages 189-192, Speyer-Rhein, DE; W. MINK: "Entformung von Spritzteilen mit Gewinden"
- KUNSTSTOFFE, vol. 74, no. 6, 1984, pages 310-311, Munich, DE; W.R. WEINGÄRTNER: "Spritzgiesswerkzeug für Schlauchverbinder"

## Description

The present invention is related to a plastics threaded fittings molding mechanism.

It has been proposed in molding apparatus using conventional molding technique to make plastics threaded fittings of single direction, however, it is desirable to make a three-way plastics threaded fitting for fluid flow.

At present it is also known, from document Plastverarbeiter, vol. 30, no. 4, April 1979, pages 189-192, Speyer-Rhein, DE; W. Mink: "Entformung von Spritzteilen mit Gewinden", a molding apparatus adapted to obtain a five-ways molded fitting having inner threads placed on different lying planes. For each way of the fitting to be obtained, the apparatus comprises an axially displaceable rod provided with a threaded portion which defines a female thread on the inner surface of the corresponding way of the fitting. The various displaceable rods are connected and syncronized by a transmission which grants a correct posizioning of said rods.

It is to be noted that the above apparatus is not able to obtain "T" fittings with high efficiency and has not the possibility to obtain "T" fittings wherein each tubolar portion of the fitting can be easily modified in lenght to satisfy a wide range of applications.

Therefore it is object of the present invention to solve the above technical problem by providing a high efficiency mechanism which is capable of making "T" shaped plastics threaded fittings of various dimensions.

At this purpose the present invention uses a plastics threaded fitting molding mechanism employing three pushing rods with threaded head portions to form female threads and three shafts co-axially disposed therein, meanwhile, molten plastics is extruded into a space generally defined by said rods and said shafts.

It is another object of the present invention to provide a plastics threaded fittings molding mechanism able to reduce manufacturing costs.

The above objects are substantially reached by a plastics threaded fittings molding mechanism according to claim 1.

In the drawings:
- Fig. 1 is a frontal elevation view according to the present invention;
- Fig. 2 shows an arrangement of three sprockets in a transmission;
- Fig. 3 is a partial view showing a vertical pushing assembly;
- Fig. 4 is a partial view showing an horizontal pushing assembly;
- Fig. 5 shows horizontal pushing means and shafts;
- Fig. 6 shows the connection of horizontal shafts with a flange;

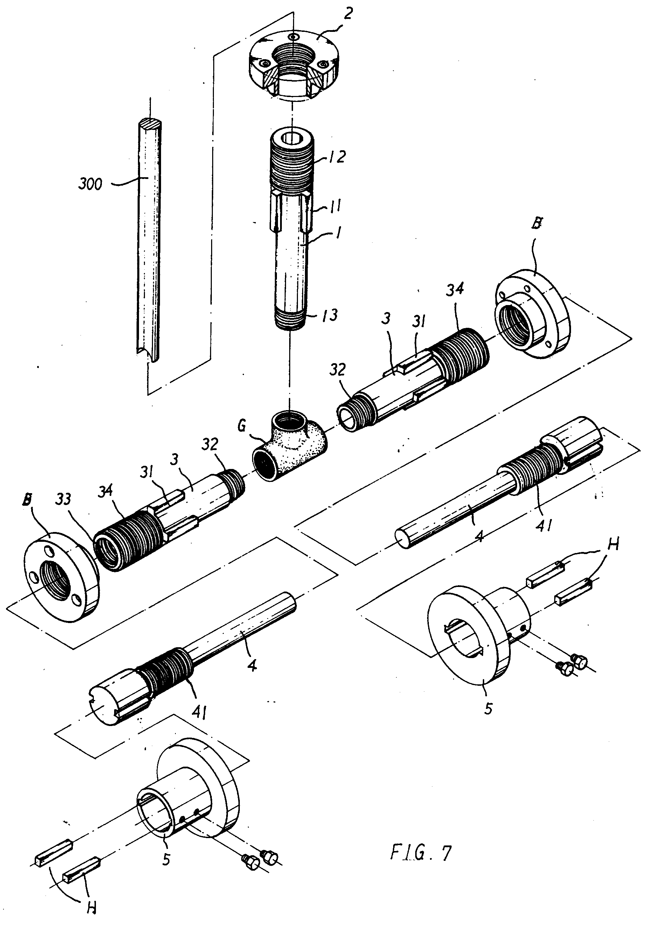

- Fig. 7 is a perspective view showing a partial assembly of the present invention;

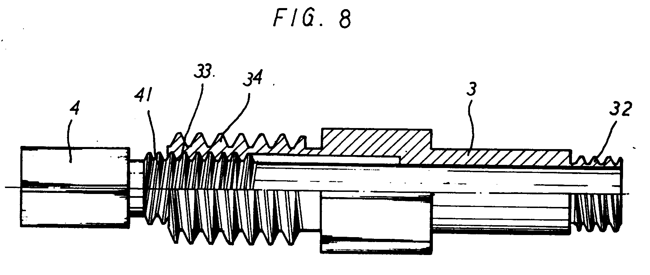

- Fig. 8 shows the assembly of horizontal pushing means and an horizontal shaft;

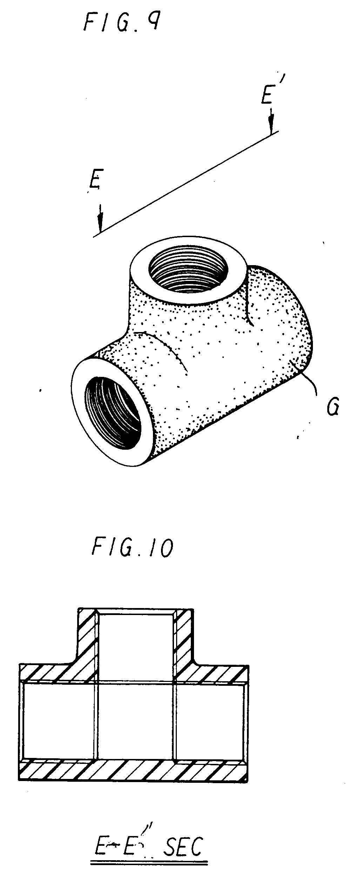

- Fig. 9 is a perspective view of a three-way plastics threaded fitting;
- Fig. 10 is a frontal elevational view thereof;
- Fig. 11 is a perspective view according to Fig. 3;
- Fig. 12 is a perspective view showing an exterior three-way plastics threaded fitting according to another embodiment of the present invention.

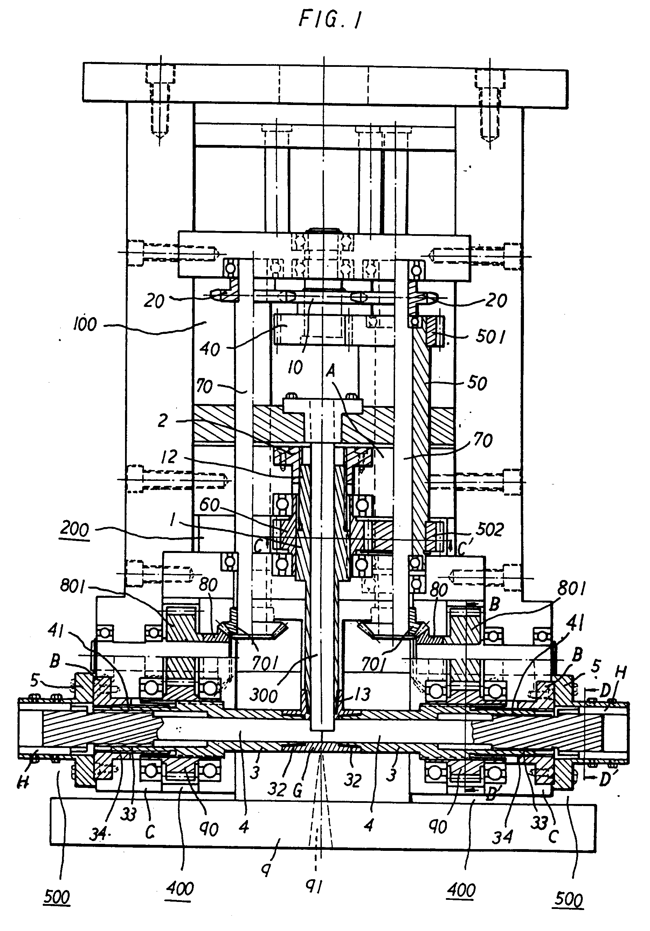

Referring to Fig. 1, a plastics threaded fitting molding mechanism generally comprises a transmission 100, a vertical pushing rod assembly 200, a vertical shaft assembly 300, an horizontal pusing rod assembly 400, and an horizontal shaft assembly 500.

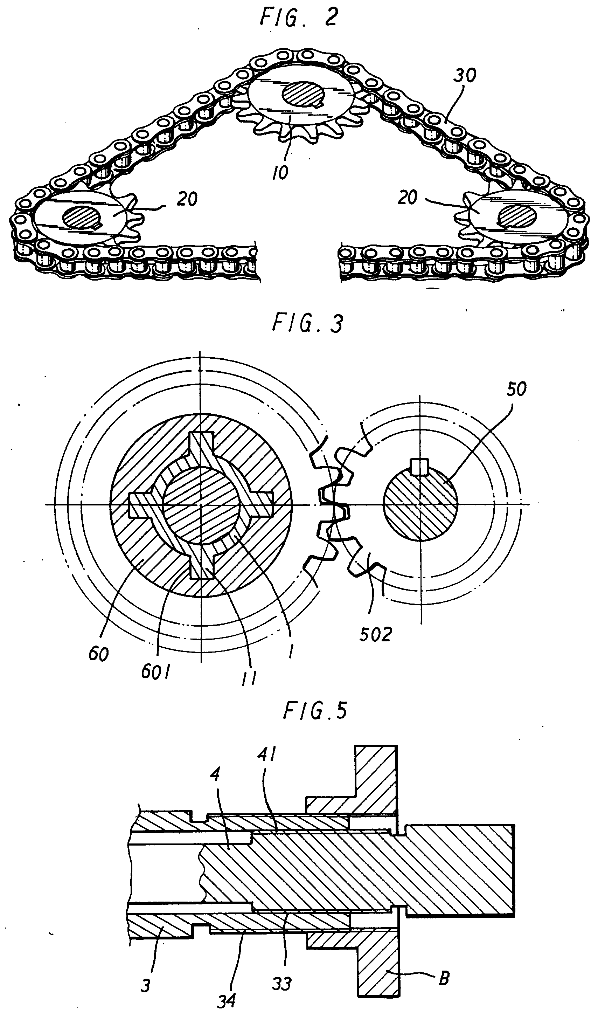

The transmission 100 comprises a driving sprocket 10 and a pair of driven sprockets 20, driven by a motor (not shown) via a chain 30 as shown in Fig. 2, so that said sprockets rotate in synchronism. Said driving sprocket 10 is further connected to a first gear 40 which is engaged with second a gear 501 mounted on an end of a shaft 50, said shaft 50 having a lower gear 502 mounted on its other end and engaged with a third gear 60, so that said third gear 60 is driven simultaneously. Meanwhile, said driven sprockets 20 are co-axially engaged with a main shaft 70 respectively, and thus, transmit power to a first bevel gear 701 connected at a lower end of said main shaft. Said first bevel gear 701 is further engaged with a second bevel gear 80 to drive a fourth gear 801 mounted adjacent to said second bevel gear, and then to drive a fifth gear 90, so that the power output from said motor is directed transversely for horizontal motion.

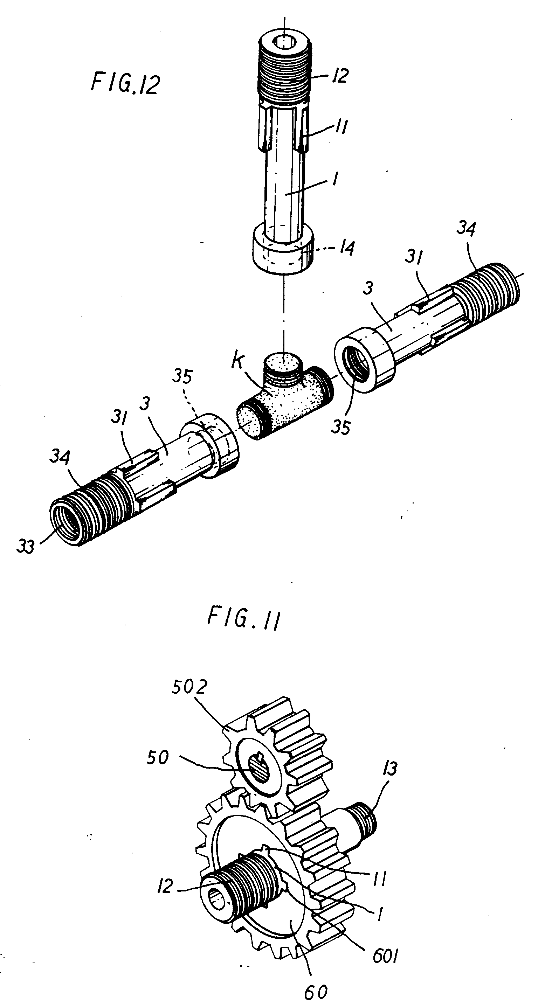

The vertical pushing rod assembly 200 comprises a plurality of rails 11 formed on an exterior surface of a vertical pushing rod 1 in axial direction and insertable in said third gear 60 via a plurality of grooves 601, defined therein (see Figs. 3 and 11). Said vertical pushing rod 1 further has a threaded portion 12 at an upper end thereof to be mounted, with a flange 2, to plate A; the vertical pushing rod (1) presents also a threaded portion 13 formed at a lower end thereof to receive molten plastic and to form the complement or female threaded portion of said plastics threaded fitting.

In the meantime, said vertical shaft assembly 300, which is disposed axially in said vertical pushing rod assembly 200, is forced to move vertically by oil or air cylinder (not shown).

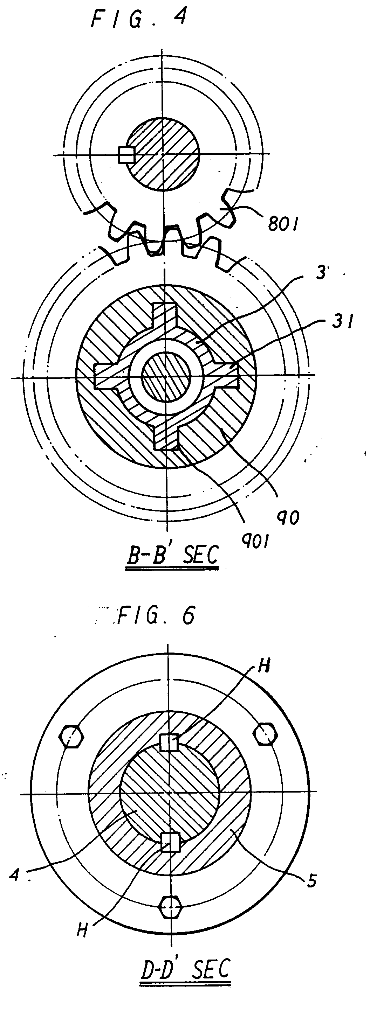

The horizontal pushing rod assembly 400 comprises a pair of horizontal pushing rods 3 provided with a plurality of rails 31 inserted into said fifth gear 90 via grooves 901 defined therein (see Fig. 4) such that said pushing rods 3 are driven in synchronism with said fifth gear 90.

One end of the horizontal pushing rods 3 is provided with threaded portions 32 to produce corresponding complement or female threads on said plastics threaded fitting inner surface. The other end of said horizontal pushing rods is provided with inner threaded portions 33, engaged with horizontal shafts 4, and outer threaded portions 34, engaged with flange B of framework C (see Fig. 1).

The horizontal shaft assembly 500 comprises a pair of horizontal shafts 4, each having a threaded portion 41, disposed co-axially in the corresponding horizontal pushing rod 3 and threadedly engaged at the threaded portion 41 with the inner threaded portion 33 (Fig. 5 and 6). One end of horizontal said shafts 4 is engaged with a key H and secured to a flange 5 which is further mounted on to a flange B, so that the horizontal pushing rods 3 are driven to rotate, and force said horizontal shafts 4 threadedly to move the one towards the other. More in detail, said horizontal shafts 4 are moved faster than the horizontal pushing rods 3, so that, due to threaded arrangement, the horizontal shafts 4 will project forward relative to said horizontal pushing rods, at the end of the stroke.

It is further pointed out that, in order to reverse the operation, the motor of said transmission 100 is rotated in reverse direction to drive said sprocket rotation reversely in synchronism. Similarly, said horizontal shafts 4 moving faster than the horizontal pushing rods, will project backward with respect to said horizontal pushing rods 3.

In operation, as the vertical pushing rod 1 moves downward, the horizontal pushing rods 3 move forward toward each other. Meanwhile, the horizontal shafts 4 perform in the same manner, such that molten plastic can be injected from a cavity 91 formed on bottom plate 9 to form a three-way plastics threaded fitting G. Reversing the operation, and taking out the plastics threaded fitting G, the operation can be carried out continuously for fast and accurate production to accomplish the object set forth above.

Accordingly, it is possible to make plastics threaded fitting with exterior threaded portions in the same manner.

Referring to Fig. 12, an inner threaded portion 14 formed on the corresponding end of the vertical pushing rod 1, and an inner threaded portion 35 formed on horizontal pushing rods 3 are replacing threaded portion 13 and 32 respectively, therefore, outer threaded portions of said plastics threaded fitting can be made accordingly.

Since the nature of making said fitting is to utilize the combination of pushing rods and shafts, therefore, the inner or outer diameters can be selected to fit various types of pipes.

## Claims

1. A plastics threaded fitting molding mechanism comprising:
a) - a transmission (100);
b) - a vertical pushing rod assembly (200) having a vertical pushing rod (1), said vertical pushing rod (1) presenting a threaded portion (13, 14) formed at a lower end thereof to form the complement threaded portion of a plastics threaded fitting (G);
c) - an horizontal pushing rod assembly (400), having a pair of horizontal pushing rods (3), one end of the horizontal pushing rods (3) having threaded portions (32, 35) adapted to provide corresponding complement threads of said plastics threaded fitting, characterized by the fact that it further comprises:
d) - a vertical shaft assembly (300) disposed axially in said vertical pushing rod assembly (200) and forced to move by oil or air cylinder;
e) - an horizontal shaft assembly (500) having a pair of horizontal shafts (4) disposed co-axially in said horizontal pushing rods (3);
f) - said transmission (100) comprising a driving sprocket (10) and a pair of driven sprockets (20) driven by a motor via a chain (30) to rotate in syncronism ;
g) - said driving sprocket being further connected to a first gear (40) which is engaged with a second gear (501) mounted on an end of a shaft (50) having a lower gear (502) mounted on its other end and engaged with a third gear (60), so that the third gear is driven simultaneously;
h) - said vertical pushing rod assembly (200) comprising a plurality of rails (11) formed on an exterior surface of the vertical pushing rod (1) in axial direction and insertable in said third gear (60) via a plurality of grooves (601) defined therein, said vertical pushing rod (1) further having a threaded portion (12) at an upper end thereof engaged with a flange (2) mounted to a plate (A);
i) - said driven sprockets being co-axially engaged with a main shaft (70) respectively for transmitting power to a first bevel gear (701) connected at a lower end of said main shaft (70), said first bevel gear (701) being further engaged with a second bevel gear (80) to drive a fifth gear (90) so that the power from said motor is directed transversely for horizontal motion;
j) - said horizontal pushing rods (3) being provided with a plurality of rails (31) insertable into said fifth gear (90) via grooves (901) defined therein, so that said horizontal pushing rods (3) are driven in synchronism with said fifth gear (90), the other end of the horizontal pushing rods (3) being provided with inner threaded portions (33), engaged with the horizontal shafts (4), and with outer threaded portions (32), engaged with flanges (B) of a framework (C);
k) - said horizontal shafts (4) having one end, engaged with a key (H) and secured to a flange (5), and a threaded portion (41), disposed co-axially in the corresponding horizontal pushing rod (3) and threadedly engaged with the inner threaded portion (33);
l) - said vertical pushing rod (1) being movable downwardly, said horizontal pushing rods (3) being movable the one towards the other, said horizontal shafts (4) being drivable to project forward relative to said horizontal pushing rods (3) at the end of the stroke so that molten plastic can be injected from a cavity (91) formed on a bottom plate to form the three way plastics threaded fitting (G).

2. A plastics threaded fitting molding mechanism according to claim 1, characterized by the fact that said threaded portions (32) of said horizontal pushing rods (3) and said threaded portion (13) of said vertical pushing rod (1) are outer threaded portions that make an inner threaded plastics fitting.

3. A plastics threaded fitting molding mechanism according to claim 1, characterized by the fact that said threaded portions (35) of said horizontal pushing rods (3) and said threaded portion (14) of said vertical pushing rod (1) are inner threaded portions that make an outer threaded plastics fitting.

## Patentansprüche

1. Vorrichtung zum Formen von geschraubten Kunststoffverbindungen mit:
a) einem Antrieb (100)
b) einer senkrechten Schubstangenanordnung (200) mit einer senkrechten Schubstange (1), wobei die senkrechte Schubstange (1) ein Gewindeteil (13, 14) besitzt, das an einem ihrer Enden so geformt ist, daß eine dazu komplementäre Kunststoffverbindung (G) realisiert wird;
c) einer horizontalen Schubstangenanordnung (400) mit einem Paar horizontaler Schubstangen (3), wobei jeweils ein Ende der horizontalen Schubstangen (3) Gewindeteile (32, 35) besitzt, die entsprechende Gewinde in der Kunststoffverbindung formt, gekennzeichnet durch folgende weitere Merkmale:
d) eine senkrechte axial in der senkrechten Schubstangenanordnung (200) angeordnete Wellenanordnung (300), die mittels eines Öl-oder Luftzylinders bewegt wird,
e) eine horizontale Wellenanordnung (500) mit einem Paar horizontaler Wellen (4), die koaxial in den horizontalen Schubstangen (3) angeordnet sind,
f) wobei der Antrieb (100) ein Antriebsrad (10) und ein Paar angetriebener Kleinräder (20) besitzt, die synchron in Drehbewegung mittels eines Motors über eine Kette (30) angetrieben sind,
g) wobei das Antriebsrad außerdem mit einem ersten Zahnrad (40) verbunden ist, das mit einem zweiten Zahnrad (501) gekoppelt ist, das auf einem Ende einer Welle (50) montiert ist, wobei die Welle auf ihrem anderem Ende ein unteres Zahnrad (502) aufweist, das mit einem dritten Zahnrad (60) kämmt, so daß das dritte Zahnrad gleichzeitig angetrieben wird;
h) wobei die senkrechte Schubstangenanordnung (200) eine Mehrzahl von Schienen (11) aufweist, die auf einer äußeren Oberfläche der senkrechten Schubstange (1) in axialer Richtung geformt sind und die in das dritte Zahnrad (60) mittels einer Mehrzahl von eingearbeiteten Nuten (601) einführbar sind wobei die senkrechte Schubstange (10) an seinem oberen Ende außerdem ein Gewindeteil (12) aufweist, das mit einem Flansch (2) an einer Platte (A) zusammenwirkt;
i) die angetriebenen Kleinräder mit einer koaxialen Hauptwelle (70) kämmen, die zur Übertragung von Energie an einem ersten Kegelrad (701) vorgesehen ist, das mit einem unteren Ende der Hauptwelle (70) verbunden ist, wobei das erste Kegelrad (701) weiter mit einem zweiten Kegelrad (80) kämmt, um ein fünftes Zahnrad (90) anzutreiben, und somit die Energie des Motors quer auszurichten und eine horizontale Bewegung zu erzeugen;
j) die horizontalen Schubstangen (3) eine Mehrzahl von in das fünfte Rad (90) durch darin erzeugten Nuten (901) einführbaren Schienen (31) aufweisen, sodaß die horizontalen Schubstangen (3) syncron zum fünften Rad angetrieben werden, wobei das andere Ende der Schubstangen (3) innere Gewindeteile (33) aufweist, die mit den horizontalen Wellen (4) gekoppelt sind, und äußere Gewindeteile (32), die mit Flanschen (B) eines Gestelles (C) zusammenwirken;
k) die horizontalen Wellen (4) besitzen ein mit einem Keil (H) gekoppeltes und an einem Flansch (5) fest verbundenes Ende, und ein koaxial in der entrsprechenden Schubstange (3) angeordnetes Gewindeteil (41), das mit dem inneren Gewindeteil (33) gekoppelt ist;
l) die senkrechte Schubstange (1) ist nach unten beweglich, wobei die horizontalen Schubstangen (3) gegeneinander beweglich sind, die horizontalen Wellen (4) antreibbar sind um am Ende des Hubes vorne die entrsprechenden horizontalen Schubstangen (3) zu überragen, sodaß geschmolzenes Kunststoff aus einem auf einer Basisplatte geformten Hohlraum (91) eingespritzt werden kann, um die Drei-Wege Kunststoffverbindung (G) zu formen.

2. Vorrichtung zum Formen von geschraubten Kunststoffverbindungen gemäß Anspruch 1, dadurch gekennzeichnet daß die Gewindeteile (32) der horizontalen Schubstangen (3) und die Gewindeteile (13) der senkrechten Schubstange (1) Außengewindeteile sind, die eine Kunststoffverbindung mit inneren Gewinde realisieren.

3. Vorrichtung zum Formen von geschraubten Kunststoffverbindungen gemäß Anspruch 1, dadurch gekennzeichnet daß die Gewindeteile (35) der horizontale Schubstangen (3) und das Gewindeteil (14) der senkrechten Schubstange (1) Innengewindeteile sind, die eine Kunststoffverbindung mit äußerem Gewinde realisieren.

## Revendications

1. Dispositif pour le moulage de raccords en plastique filetés comprenant:
a) une transmission (100);
b) un ensemble vertical de tige de poussée (200) ayant une tige de poussée verticale (1), ladite tige de poussée verticale (1) présentant une portion filetée (13, 14) formée à son extrémité inférieure pour réaliser la portion filetée complémentaire d'un raccord en plastique fileté (G);
c) un ensemble horizontal de tige de poussée (400) ayant une paire de tiges de poussée horizontales (3), l'une des extrémités des tiges de poussées horizontales (3) ayant des portions filetées (32, 35) adaptées à fournir des filets complémentaires dudit raccord en plastique fileté, charactérisé en que qu'il comporte en outre:
d) un ensemble d'arbre vertical (300) disposé axialement dans ledit ensemble vertical de tige de poussée (200) et dont le mouvement a lieu par un cylindre hydraulique ou pneumatique;
e) un ensemble horizontal d'arbre (500) ayant une paire d'arbres horizontaux (4) disposés coaxialement dans lesdites tiges de poussée horizontales (3);
f) ladite transmission (100) comportant un pignon de commande (10) et une paire de pignons menés (20) commandés par un moteur à travers une chaîne (30) pour la rotation en synchronisme;
g) ledit pignon de commande étant en outre connecté à un premier engrenage (40) qui est en engagement avec un deuxième engrenage (501) monté sur une extrémité d'un arbre (50) ayant un engrenage inférieur (502) monté sur son autre extrémité et en engagement avec un troisième engrenage (60), de sorte que le troisième engrenage est entraîné simultanément;
h) ledit ensemble vertical de tige de poussée (200) comprenant une pluralité de nervures d'emboîtement (11) formées sur une surface extérieure de la tige verticale de poussée (1) dans la direction axiale et insérable dans ledit troisième engrenange (60) à travers une pluralité de rainures (601) y définies, ladite tige de poussée verticale (1) ayant en outre une portion filetée (12) à son extrémité supérieure engagée avec une bride (2) montée sur une plaque (A);
i) lesdits pignons menés étant engagés de manière coaxiale respectivement avec un arbre principal (7) pour la transmission de puissance à un premier engrenage conique (701) relié à une extrémité inférieure dudit arbre principal (70), ledit premier engrenage conique (701) étant en outre engagé avec un deuxième engrenage conique (80) pour commander un cinquième engrenage (90) de sorte que la puissance depuis ledit moteur est dirigée transversalement pour le mouvement horizontal;
j) lesdites tiges horizontales de poussée (3) étant pourvues d'une pluralité de nervures (31) insérables dans ledit cinquième engrenage (90) à travers des rainures (901) y définies, de sorte que lesdites tiges horizontales de poussée (3) sont commandées en synchronisme avec ledit cinquième engrenage (90), l'autre extrémité des tiges de poussée horizontales (3) étant pourvue de portions filetées intérieurement (33), engagées aux arbres horizontaux (4), et de portions filetées extérieurement (32) engagées aux brides (B) d'un bâti (C);
k) lesdits arbres horizontaux (4) ayant une extrémité engagée par une clavette (H) et fixée à une bride (5), et une portion filetée (41) disposée coaxialement dans la tige de poussée horizontale correspondante (3) et engagée par vissage dans la portion filetée intérieurement (33);
l) ladite tige de poussée verticale (1) étant mobile vers le bas, lesdites tiges horizontales de poussée (3) étant mobiles l'une vers l'autre, lesdits arbres horizontaux (4) étant susceptibles de commande pour faire saillie en avant par rapport auxdites tiges horizontales de poussée (3) à la fin de la course, de telle sorte qu'on peut injecter de la plastique en fusion à partir de la cavité (91) formée sur une plaque de fond à former le raccord en plastique fileté à trois voies (G).

2. Dispositif pour le moulage de raccords en plastique filetés selon la revendication 1, caractérisé en ce que lesdites portions filetées (32) desdites tiges horizontales de poussée (3) et ladite portion filetée (13) de ladite tige de poussée verticale (1) sont des portions filetées extérieurement qui forment un raccord en plastique fileté intérieurement.

3. Dispositif pour le moulage de raccords en plastique filetés selon la revendication 1, caractérisé en ce que lesdites portions filetées (35) desdites tiges horizontales de poussée (3) et ladite portion filetée (14) de ladite tige verticale de poussée (1) sont des portions filetées intérieurement qui forment un raccord en plastique fileté extérieurement.
